# EUROPÄISCHE PATENTSCHRIFT

(11) **EP 0 375 603 B1**
(45) Veröffentlichungstag und Bekanntmachung des Hinweises auf die Patenterteilung: **31.03.1993**
(21) Anmeldenummer: 89810829.5
(22) Anmeldetag: 03.11.1989
(51) Int. Cl.: G01J 3/46

(54) **Verfahren und Vorrichtung zur Sichterfassung einer Farbabweichung einer mehrfarbigen Reproduktion**
Method and apparatus for visually detecting a colour deviation in a multicolour reproduction
Procédé et dispositif pour détecter visuellement une dérive de couleur d'une reproduction polychrome

(30) Priorität: 18.11.1988 CH 4290/88
(43) Veröffentlichungstag der Anmeldung: 27.06.1990
(73) Patentinhaber: ALUSUISSE-LONZA SERVICES AG, 8034 Zürich (CH)
(72) Erfinder: Dolveck, Gilbert, F-26210 St.Sorlin-en-Valloire (FR)

(56) Entgegenhaltungen:
- US-A- 1 924 747
- US-A- 2 054 195
- US-A- 2 221 916
- US-A- 2 953 963

## Beschreibung

Die vorliegende Erfindung betrifft das technische Gebiet des Druckwesens im allgemeinen Sinne und bezieht sich genauer auf die Techniken eines Drucks einer graphischen, mehrfarbigen Darstellung, die ausschließlich oder nicht aus Texten und/oder Abbildungen besteht und auf einem Träger verschiedener Form und Art reproduziert ist.

Die Erfindung bezieht sich insbesondere auf die Mittel, die zur Erfassung einer Farbabweichung, die auf den erhaltenen mehrfarbigen Reproduktionen auftreten kann, bezüglich der mehrfarbigen, graphischen Originaldarstellung geeignet sind.

Die Erfindung findet eine besonders vorteilhafte Anwendung in den Techniken zum Druck einer graphischen, mehrfarbigen Darstellung auf Trägern, die aus insbesondere metallischen Fläschchen bestehen und zum Enthalten von Stoffen verschiedener Arten bestimmt sind.

Bei der vorstehend betroffenen Anwendung tritt im Lauf des Druckens einer bestimmten graphischen Darstellung auf den Fläschchen eine Farbabweichung der Reproduktionen auf, die u. a. von einer Änderung der Farbtönungen der Farben herrührt. Diese Änderung der Farbtöne ergibt sich hauptsächlich aus Temperaturänderungen, denen die Farbbehälter ausgesetzt sind und die im Lauf des Druckverfahrensganges aus verschiedenen Gründen, wie z.B. der Erhitzung der Druckmaschinen, auftreten.

Es ist daher zweckmäßig, periodisch die Farben der erhaltenen Reproduktionen mit denen der graphischen Originaldarstellung zu vergleichen, um die relativen Anteile der verwendeten Druckfarben zu modifizieren und so die festgestellte Abweichung der Farbtöne zu korrigieren. Diese Kontrolle wird gegenwärtig von Personen übernommen, die beauftragt sind, die Abweichung der Farben visuell zu erfassen.

Außer der Tatsache, daß sich diese Kontrollen als heikel und ermüdend erweisen und eine sehr große Erfahrung und visuelle Feinfühligkeit erfordern, zeigt es sich, daß die Abweichung der Farben umso schwieriger zu erfassen ist, wenn die graphische Darstellung in Form von Zeichnung, Gemälde oder Fotografie dargeboten wird, womit im wesentlichen ein bildliches Element, wie z.B. ein Gesicht oder eine Landschaft, gezeigt wird. Tatsächlich hat in diesem Fall die mit der Kontrolle beauftragte Person die Neigung, den durch die Reproduktion gegebenen allgemeinen Eindruck zu betrachten und nicht mehr die verschiedenen Farbtöne der das bildliche Element ergebenden Einzelheiten zu beobachten. Daraus folgt, daß die Abweichung der Farben nur erfaßt wird, wenn sie offensichtlich wird. Diese späte Erfassung hat einen Ausschuß der Fläschchen zur Folge, die solche Reproduktionen mit Farbtönungen aufweisen, die nicht mit denen der Originaldarstellung übereinstimmen.

Die vorliegende Erfindung bezweckt, gerade diesen Nachteil zu überwinden, indem ein Verfahren vorgeschlagen wird, das die Sichterfassung einer Abweichung der Farben ermöglicht, sobald sie im Lauf des Druckens einer graphischen, mehrfarbigen Originaldarstellung auftritt.

Die Erfindung bezweckt ebenfalls, ein Verfahren zu bieten, das es ermöglicht, sich von dem auf der zu kontrollierenden Reproduktion und auf der Originaldarstellung wiedergegebenen bildchen Element derart zu lösen, um den Farbunterschied festzustellen, der im Lauf des Druckens auftreten kann.

Die Erfindung bezweckt auch, ein Verfahren vorzuschlagen, das eine Erleichterung des Vergleichs der Farben zwischen einer graphischen Originaldarstellung und einer zu kontrollierenden Reproduktion ermöglicht.

Um die vorstehend aufgeführten Ziele zu erreichen, ist das Verfahren zur Sichterfassung einer Farbabweichung einer mehrfarbigen Reproduktion, die auf einen Träger aufgebracht ist und zu kontrollierende Reproduktion genannt wird, bezüglich einer graphischen, mehrfarbigen Bezugsdarstellung dadurch gekennzeichnet, daß es darin besteht:
- Für die graphische, mehrfarbige Bezugsdarstellung und die zu kontrollierende Reproduktion je eine zur anderen senkrechte und im wesentlichen in einem gleichen Punkt auf der Darstellung und der Reproduktion positionierte Bezugsachse zu definieren,
- zur Drehung der Darstellung und der Reproduktion längs ihrer Bezugsachse überzugehen, um für jede von ihnen ein "Diskogramm" zu erhalten, das aus farbigen konzentrischen Ringen gebildet ist, die jeweils eine bestimmte Breite und Farbtönung aufweisen,
- und die beiden erhaltenen Diskogramme zu vergleichen, indem man die Farbtönungs- und/oder Breitenunterschiede der Ringe eines Diskogramms bezüglich denen des anderen Diskogramms derart erfaßt, um die Farbabweichung der zu kontrollierenden Reproduktion nachzuweisen.

Die Erfindung bezweckt auch, eine Vorrichtung vorzuschlagen, die die Durchführung des Verfahrens gemäß der Erfindung ermöglicht und aufweist:
- Ein System zur Positionierung der Darstellung und der Reproduktion längs einer Bezugsachse, die im wesentlichen zu einem gleichen Punkt auf der Darstellung und der Reproduktion verläuft,
- zwei Mittel zum Versetzen der Darstellung bzw. der Reproduktion in Drehung um ihre Bezugsachse und mit einer bestimmten Geschwindigkeit, um eine Kontinuitäts-Sichtwahrnehmung zu erhalten.

Verschiedene andere Merkmale ergeben sich aus der unten gegebenen Beschreibung unter Bezugnahme auf die beigefügten Zeichnungen, die als nicht einschränkende Beispiele Ausführungsformem des Gegenstands der Erfindung zeigen.

Die Fig. 1 ist eine Darstellung eines Schemas zur Erläuterung des Erfassungsverfahrens gemäß der Erfindung.

Die Fig. 2 ist eine Darstellung einer charakteristischen Einzelheit des Verfahrens gemäß der Erfindung.

Die Fig. 3 ist eine Darstellung eines Ausführungsbeispiels einer Vorrichtung, die die Durchführung eines Verfahrens ermöglicht.

Die Fig. 4 ist eine Darstellung einer charakteristischen Einzelheit der Vorrichtung gemäß der Erfindung.

Die Fig. 5 ist eine Draufsicht im wesentlichen längs der Linie V-V der Fig. 4.

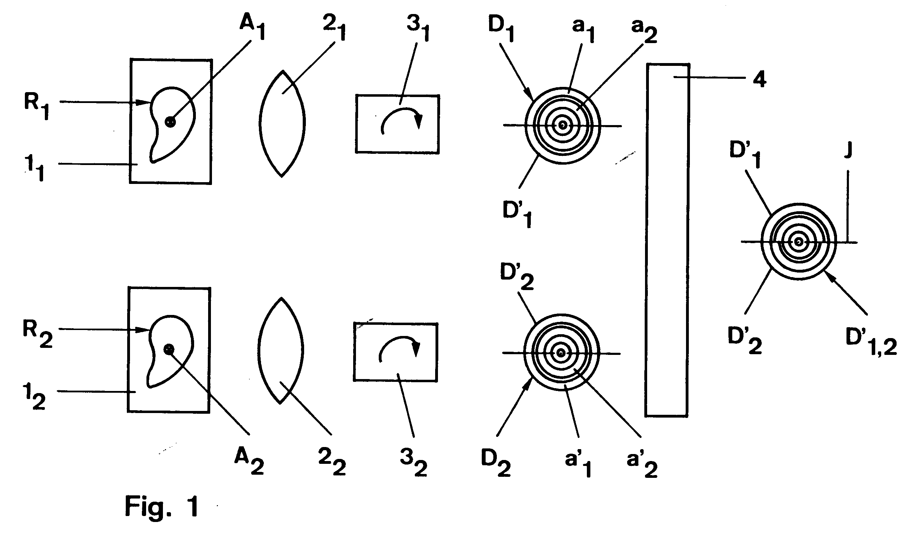

Die Fig. 1 veranschaulicht schematisch die Durchführung eines Verfahrens gemäß der Erfindung, das die Sichterfassung einer Farbabweichung einer zu kontrollierenden mehrfarbigen Reproduktion R₂, die auf einen Träger 1₂ verschiedener Form und Art und beispielsweise ein metallisches zylindrisches Fläschchen von Kreisquerschnitt aufgebracht ist, bezüglich eine auf einen Träger 1₁ aufgebrachten, graphischen, mehrfarbigen Bezugsdarstellung R₁ ermöglicht.

Unter graphischer, mehrfarbiger Bezugsdarstellung versteht man zweckmäßig jede Darstellung, die ausschließlich oder nicht einerseits aus Texten, die in Manuskript-, Schreibmaschinen- oder digitalisierter Form vorliegen, und/oder andererseits aus Illustrationen besteht, die in Form von Zeichnungen, Gemälden oder Fotografien in Farben vorliegen.

Es muß berücksichtigt werden, daß die graphische Bezugsdarstellung im veranschaulichten Beispiel eine mehrfarbige Bezugsreproduktion R₁ bildet, die auf ein Fläschchen 1₁ aufgebracht ist, das dem Fläschchen 1₂ gleich ist, das die zu kontrollierende Reproduktion trägt. Selbstverständlich könnte in Betracht gezogen werden, die zu kontrollierende Reproduktion mit der graphischen, mehrfarbigen Originaldarstellung zu vergleichen, die auf einen vom Fläschchen R₂ verschiedenen Träger aufgebracht ist.

Es soll unter dem Begriff der mehrfarbigen Reproduktion jede Reproduktion der graphischen Bezugsdarstellung durch die verschiedenen herkömmlichen Drucktechniken, wie z.B. Heliographie oder Offset, verstanden werden.

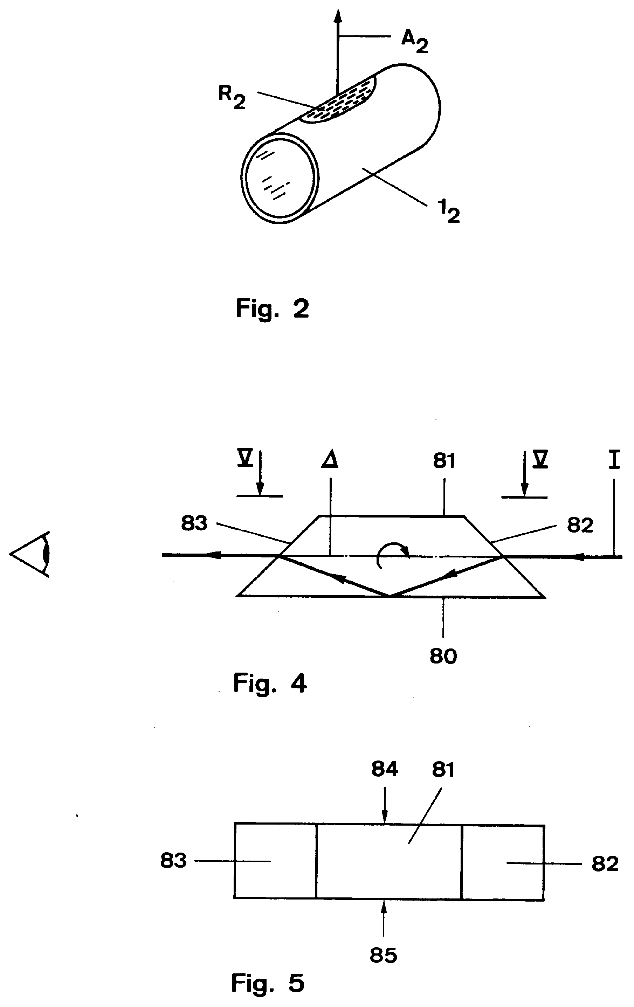

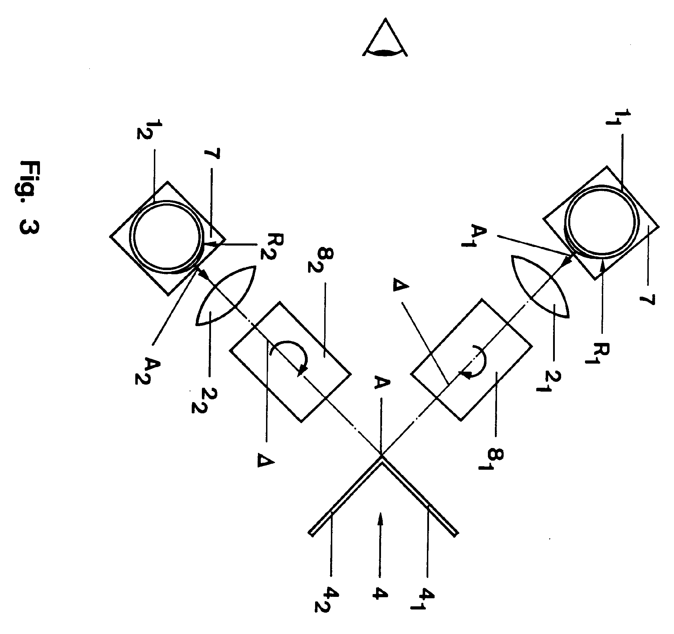

Das Verfahren gemäß der Erfindung besteht darin, jedes Fläschchen 1₁, 1₂ derart zu positionieren, daß jede Reproduktion R₁, R₂ eine zum Träger senkrechte und im wesentlichen auf einem gleichen Punkt auf den Reproduktionen positionierte Bezugsachse A₁, A₂ aufweist (Fig. 2).

Im Fall, wo die Reproduktionen auf nicht ebenen Trägern angebracht sind, wird jedes Fläschchen 1₁, 1₂ in Beziehung mit einem optischen System 2₁, 2₂ angebracht, das eine Korrektur der Feldtiefe der Reproduktionen ermöglicht, um im wesentlichen in Ebenen gebildete Bilder zu erhalten.

Das Verfahren gemäß der Erfindung besteht anschließend darin, zur Drehung jeder der Reproduktionen R₁, R₂ längs ihrer Bezugsachse A₁, A₂ durch Mittel 3₁, 3₂ mit einer bestimmten Geschwindigkeit überzugehen, um eine Kontinuitäts-Sichtwahrnehmung zu erhalten. Diese Drehung der Reproduktionen R₁, R₂ ermöglicht, für jede unter ihnen ein Bild D₁ bzw. D₂ zu erhalten, das aus farbigen konzentrischen Ringen a₁ , a₂, ... aₙ und a′₁, a′₂, ... a′ₙ gebildet ist, die jeweils eine bestimmte Breite und Farbtönung in Beziehung zu dem Teil der Reproduktion zeigen, dem sie entsprechen. Jedes Bild D₁, D₂ wird in der folgenden Beschreibung "Diskogramm" aufgrund der Tatsache genannt, daß man ein Diagramm erhält, das konzentrische Farbstreifen aufweist. Die so erhaltenen Diskogramme D₁, D₂ ermöglichen die Erfassung der Farbabweichung der zu kontrollierenden Reproduktion durch Vergleich der Farbtönungs- und/oder Breitenunterschiede der Ringe a₁, a₂, ... aₙ des Diskogramms D₁ gegenüber den Ringen a′₁, a′₂ ...a′ₙ des Diskogramms D₂.

Selbstverständlich muß in Betracht gezogen werden, daß die Zahl n von Ringen eines Diskogramms gegenüber dem anderen gleich oder unterschiedlich sein kann.

Ein solches Verfahren ist besonders vorteilhaft vor allem, wenn die Reproduktionen im wesentlichen ein bildliches Element zeigen. Tatsächlich ermöglicht die Drehung der Reproduktionen jenseits der Netzhautpersistenz, aus den Diskogrammen das bildliche Element zu eliminieren, das die Erfassung der Abweichung der Farben stört. Die mit der Kontrolle beauftragte Person konzentriert so ihre Beobachtung allein auf die Ringe, die die Standardbilder bilden.

Selbstverständlich kann man eine Fotografie der beiden erhaltenen Diskogramme D₁, D₂ für eine spätere Verarbeitung herstellen.

Andererseits muß in Betracht gezogen werden, daß die Reproduktionen R₁, R₂ vor ihrer Drehung einer Lichtquelle ausgesetzt werden, die ausreicht, um eine geeignete visuelle Beobachtung zu sichern.

Um die Erfassung der Abweichung der Farben zu erleichtern, bezweckt das Verfahren gemäß der Erfindung, durch ein System 4 die Positionierung von zwei komplementären Hälften D′₁, D′₂ der beiden Diskogramme D₁, D₂ angrenzend längs ihres Durchmessers zu sichern, um ein resultierendes Diskogramm D′_{1, 2} zu erhalten. Die beiden komplementären Diskogrammhälften befinden sich so längs ihres Durchmessers angrenzend längs einer Verbindungslinie J, was es ermöglicht, Breiten- und/oder Farbtonunterschiede, die zwischen den Ringen der beiden Diskogramme auftreten können, deutlich sichtbar zu machen.

Das Verfahren gemäß der Erfindung sieht ebenfalls vor, auf das Diskogramm D₂ das feste Bild der zu kontrollierenden Reproduktion R₂ derart aufzulegen, um die Bestimmung der Beziehung zu erleichtern, die zwischen den farbigen Ringen und den entsprechenden Teilen der Reproduktion existiert.

Es ist in Betracht zu ziehen, daß das resultierende Diskogramm für spätere Verarbeitung fotografiert werden kann. Andererseits können die Diskogramme D₁, D₂ sowie das resultierende Diskogramm D′_{1,2} durch Filter bestimmter Farben beobachtet werden.

Die Fig. 3 veranschaulicht ein Ausführungsbeispiel einer Vorrichtung, die die Durchführung des Erfassungsverfahrens gemäß der Erfindung ermöglicht.

Diese Vorrichtung weist für jedes Fläschchen ein System 7 zur Positionierung der Reproduktionen längs einer Bezugsachse A₁, A₂ auf, die zu den Fläschchen 1₁, 1₂ senkrecht ist und im wesentlichen in einem gleichen Punkt auf den beiden Reproduktionen verläuft. Beispielsweise reicht eine Positionierungsgenauigkeit zwischen den Achsen in der Größenordnung von 0,1 bis 0,3 mm aus.

Jede Reproduktion R₁, R₂, die mit einem optischen System 2₁, 2₂ zur Korrektur der Feldtiefe verbunden ist, wird in Verbindung mit einem Mittel 8₁, 8₂ zum Versetzen der Reproduktion in Drehung verbunden, das im dargestellten Beispiel aus einem DOVE-Prisma besteht. Wie es genauer in der Fig. 4 deutlich wird, weist ein solches Prisma im Querschnitt eine gleichschenkelige Trapezform mit einer großen Basis 80 auf, von der sich bis zu einer kleinen Basis 81 eine Eintrittsfläche 82 und eine Austrittsfläche 83 erheben. Das Prisma weist auch zwei Seitenflächen 84 und 85 auf. Die Eintrittsfläche 82 und die Austrittsfläche 83 sowie die große Basis 80 weisen polierte Oberflächen auf, während die Seitenflächen 84, 85 und die kleine Basis 81 matte Oberflächen haben. Die Fig. 4 zeigt den Weg eines Lichtstrahls I, der längs der optischen Achse Δ des Prismas eintritt, das vorteilhaft koaxial zur Bezugsachse einer Reproduktion angeordnet ist. Die Drehung des Prismas längs seiner optischen Achse Δ ermöglicht, auf der Austrittfläche ein Bild zu erhalten, das sich zweimal schneller als das Prisma dreht. Wenn die Drehgeschwindigkeit des Prismas bestimmt wird, um eine Kontinuitätssichterfassung zu erhalten, entspricht das erhaltene Bild einem wie oben definierten Diskogramm. Die Drehgeschwindigkeit des Prismas kann beispielsweise gleich 12 U/s sein.

Selbstverständlich könnte in Erwägung gezogen werden, jedes Mittel zum Versetzen in Drehung durch ein Drehorgan auszubilden, das ein Fläschchen oder die Reproduktion trägt und dessen Drehachse mit der Bezugsachse übereinstimmt. Die Drehgeschwindigkeit des Drehorgans kann in diesem Fall beispielsweise auf 24 U/s festgelegt werden.

Die Mittel zum Versetzen in Drehung 8₁, 8₂ werden in einer Beziehung mit einem optischen System 4 angeordnet, das es ermöglicht, in längs ihres Durchmessers angrenzender Stellung zwei komplementäre Hälften der beiden Diskogramme sichtbar zu machen. Ein solches optisches System kann beispielsweise aus zwei sich unter 45° schneidenden Spiegeln 4₁, 4₂ gebildet werden, deren jeder auf dem optischen Weg eines Diskogramms angeordnet ist. Die Beobachtung der Spiegel längs ihrer gemeinsamen Kante A ermöglicht, entweder die beiden Diskogramme D₁, D₂ vollständig oder die beiden komplementären Hälften der beiden Diskogramme, die in längs ihres Durchmessers angrenzender Lage angeordnet sind, zu beobachten, indem man die gemeinsame Kante A in den Schnittpunkt der beiden optischen Achsen Δ legt, wie in der Fig. 3 veranschaulicht ist.

## Patentansprüche

1. Verfahren zur Sichterfassung einer Farbabweichung einer mehrfarbigen Reproduktion (R₂), die auf einen Träger aufgebracht ist und zu kontrollierende Reproduktion genannt wird, bezüglich einer graphischen, mehrfarbigen Bezugsdarstellung (R₁),
dadurch gekennzeichnet, daß es darin besteht:
- für die graphische, mehrfarbige Bezugsdarstellung und die zu kontrollierende Reproduktion je eine zur anderen senkrechte und im wesentlichen in einem gleichen Punkt auf der Darstellung und der Reproduktion positionierte Bezugsachse (A₁, A₂) zu definieren,
- zur Drehung der Darstellung und der Reproduktion längs ihrer Bezugsachse überzugehen, um für jede von ihnen ein "Diskogramm" (D₁, D₂) zu erhalten, das aus farbigen konzentrischen Ringen (a₁, a₂, ... aₙ und a′₁, a′₂, ... a′ₙ) gebildet ist, die jeweils eine bestimmte Breite und Farbtönung aufweisen,
- und die beiden erhaltenen Diskogramme zu vergleichen, indem man die Farbtönungs- und/oder Breitenunterschiede der Ringe eines Diskogramms bezüglich denen des anderen Diskogramms derart erfaßt, um die Farbabweichung der zu kontrollierenden Reproduktion nachzuweisen.

2. Verfahren nach dem Anspruch 1,
dadurch gekennzeichnet,
daß es darin besteht, die Farbabweichung bezüglich einer graphischen, mehrfarbigen Bezugsdarstellung zu erfassen, die von einer graphischen, mehrfarbigen Originaldarstellung gebildet wird.

3. Verfahren nach dem Anspruch 1,
dadurch gekennzeichnet,
daß es darin besteht, die Farbabweichung bezüglich einer graphischen, mehrfarbigen Bezugsdarstellung zu erfassen, die von einer Bezugsreproduktion gebildet wird, die auf einen dem die zu kontrollierende Reproduktion tragenden gleichen Träger aufgebracht ist.

4. Verfahren nach dem Anspruch 1,
dadurch gekennzeichnet,
daß es darin besteht, die längs ihrem Durchmesser aneinandergrenzende Positionierung zweier komplementärer Hälften (D′₁, D′₂)der Diskogramme zu sichern, um ein resultierendes Diskogramm (D′_{1,2}) zu erhalten, das längs der Verbindungslinie (J) eine Erfassung der Breiten- und Farbtönungsunterschiede ermöglicht, die zwischen den entsprechenden Ringen der beiden Diskogrammhälften auftreten können.

5. Verfahren nach dem Anspruch 4,
dadurch gekennzeichnet,
daß es darin besteht, auf das Diskogramm (D₂) das feste Bild der zu kontrollierenden Reproduktion aufzulegen.

6. Verfahren nach dem Anspruch 3, 4 oder 5,
dadurch gekennzeichnet,
daß es darin besteht, eine Fotografie der beiden Diskogramme (D₁, D₂) und/oder des resultierenden Diskogramms (D′_{1,2}) für eine spätere Behandlung anzufertigen.

7. Verfahren nach einem der Ansprüche 1 bis 5,
dadurch gekennzeichnet,
daß es darin besteht, die Sichterfassung der Abweichung der Farben der beiden Diskogramme (D₁, D₂) und/oder des resultierenden Diskogramms (D′_{1,2}) durch ein Filter vorzunehmen.

8. Verfahren nach dem Anspruch 1,
dadurch gekennzeichnet,
daß es darin besteht, die zu kontrollierende Reproduktion (R₂) und die graphische, mehrfarbige Bezugsdarstellung (R₁) v vor ihrer Drehung einer Lichtquelle auszusetzen.

9. Verfahren nach dem Anspruch 1,
dadurch gekennzeichnet,
daß es darin besteht, für nicht ebene Träger der Reproduktionen eine Feldtiefenkorrektur der graphischen, mehrfarbigen Originaldarstellung und der zu kontrollierenden Reproduktion vor ihrer Drehung vorzunehmen.

10. Vorrichtung zur Durchführung des Verfahrens nach den Ansprüchen 1 bis 9,
dadurch gekennzeichnet, daß sie aufweist:
- ein System (7) zur Positionierung der Darstellung und der Reproduktion längs einer Bezugsachse (A₁, A₂), die im wesentlichen zu einem gleichen Punkt auf der Darstellung und der Reproduktion verläuft,
- zwei Mittel (8₁, 8₂) zum Versetzen der Darstellung bzw. der Reproduktion in Drehung um ihre Bezugsachse und mit einer bestimmten Geschwindigkeit, um eine Kontinuitäts-Sichtwahrnehmung zu erhalten.

11. Vorrichtung nach dem Anspruch 10,
dadurch gekennzeichnet,
daß sie ein optisches System (4) aufweist, das die Sichtbarmachung zweier komplementärer Hälften der beiden Diskogramme in längs ihrem Durchmesser angrenzender Lage gestattet.

12. Vorrichtung nach dem Anspruch 10,
dadurch gekennzeichnet,
daß jedes Mittel zum Versetzen in Drehung aus einem DOVE-Prisma besteht, das auf der Bezugsachse der Reproduktion oder der Darstellung zentriert ist.

13. Vorrichtung nach dem Anspruch 10,
dadurch gekennzeichnet,
daß jedes Mittel zum Versetzen in Drehung aus einem Drehorgan besteht, das die Darstellung oder die Reproduktion trägt und dessen Drehachse mit der Bezugsachse übereinstimmt.

14. Vorrichtung nach dem Anspruch 10,
dadurch gekennzeichnet,
daß sie ein optisches System (2₁, 2₂) zur Korrektur der Feldtiefe aufweist.

## Claims

1. Method for visually detecting a colour deviation in a multicolour reproduction (R₂), applied to a carrier and referred to as the reproduction to be checked, with respect to a graphic, multicolour reference representation (R₁), characterised in that it consists in:
- defining reference axes (A₁, A₂) for the graphic, multicolour reference representation and the reproduction to be checked, said axes being positioned at right angles to one another and substantially at equivalent points on the representation and the reproduction,
- rotating the representation and the reproduction along their reference axes in order to obtain a "discogramme" (D₁, D₂) for each of them formed by concentric colour rings (a₁, a₂, ... aₙ and a′₁, a′₂, ... a′ₙ) each having a specific width and hue,
- and comparing the two discogrammes obtained, by detecting the differences between the hue and/or width of the rings of one discogramme with respect to those of the other discogramme so as to demonstrate the colour deviation of the reproduction to be checked.

2. Method according to claim 1, characterised in that it consists in detecting colour deviation with respect to a graphic, multicolour reference representation formed by a graphic, multicolour original representation.

3. Method according to claim 1, characterised in that it consists in detecting colour deviation with respect to a graphic, multicolour reference representation formed by a reference reproduction applied to a carrier identical to the one carrying the reproduction to be checked.

4. Method according to claim 1, characterised in that it consists in positioning two complementary halves (D′₁, D′₂) of the discogramme adjacent to one another along their diameters in order to obtain a resultant discogramme (D′_{1, 2}) for detecting along the connecting line (J) any differences in width and hue occurring between the corresponding rings of the two discogramme halves.

5. Method according to claim 4, characterised in that it consists in superimposing the fixed image of the reproduction to be checked on the discogramme (D₂).

6. Method according to claim 3, 4 or 5, characterised in that it consists in producing a photograph of the two discogrammes (D₁, D₂) and/or the resultant discogramme (D′_{1, 2}) for subsequent processing.

7. Method according to one of claims 1 to 5, characterised in that it consists in visually detecting the colour deviation between the two discogrammes (D₁, D₂) and/or the resultant discogramme (D′_{1, 2}) by means of a filter.

8. Method according to claim 1, characterised in that it consists in subjecting the reproduction (R₂) to be checked and the graphic, multicolour reference representation (R₁) to a light source prior to the rotation thereof.

9. Method according to claim 1, characterised in that it consists in correcting the depth of field of the graphic, multicolour original representation and the reproduction to be checked prior to the rotation thereof in the case of non-planar carriers.

10. Apparatus for implementing the method according to claims 1 to 9, characterised in that it includes:
- a system (7) for positioning the representation and the reproduction along a reference axis (A₁, A₂) extending substantially towards equivalent points on the representation and the reproduction,
- two means (8₁, 8₂) for rotating the representation or the reproduction about its reference axis and at a specific speed in order to produce a perception that appears to be continuous to the eye.

11. Apparatus according to claim 10, characterised in that it includes an optical system (4) for viewing two complementary halves of the two discogrammes in an adjacent position along their diameters.

12. Apparatus according to claim 10, characterised in that each rotating means consists of a DOVE prism which is centred on the reference axis of the reproduction or the representation.

13. Apparatus according to claim 10, characterised in that each rotating means consists of a rotating element which carries the representation or reproduction and the axis of rotation of which corresponds to the reference axis.

14. Apparatus according to claim 10, characterised in that it includes an optical system (21, 22) for correcting the depth of field.

## Revendications

1. Procédé pour détecter visuellement un écart de couleur d'une reproduction polychrome (R₂) qui est appliquée sur un support et qui est appelée reproduction à contrôler, par rapport à une représentation graphique polychrome de référence (R₁), caractérisé en ce qu'il consiste :
- à définir pour la représentation graphique polychrome de référence et pour la reproduction à contrôler des axes de référence (A₁, A₂) perpendiculaires entre eux et positionnés chacun sensiblement en un même point sur la représentation et sur la reproduction,
- à faire tourner la représentation et la reproduction autour de leur axe de référence afin d'obtenir pour chacune d'elles un "discogramme" (D₁, D₂) qui est constitué par des anneaux colorés concentriques (a₁, a₂,... aₙ et a′₁, a′₂,... a′ₙ) qui présentent chacun une largeur et une teinte déterminées, et
- à comparer les deux discogrammes obtenus en détectant les différences de teinte et/ou de largeur des anneaux d'un discogramme par rapport à ceux de l'autre discogramme de manière à mettre en évidence l'écart de couleur de la reproduction à contrôler.

2. Procédé selon la revendication 1, caractérisé en ce qu'il consiste à détecter l'écart de couleur par rapport à une représentation graphique polychrome de référence qui est constituée par une représentation graphique polychrome originale.

3. Procédé selon la revendication 1, caractérisé en ce qu'il consiste à détecter l'écart de couleur par rapport à une représentation graphique polychrome de référence qui est constituée par une reproduction de référence qui est appliquée sur un support identique à celui qui porte la reproduction à contrôler.

4. Procédé selon la revendication 1, caractérisé en ce qu'il consiste à fixer la position contiguë suivant leur diamètre de deux moitiés complémentaires (D′₁, D′₂) des discogrammes pour obtenir un discogramme résultant (D′_{1,2}) qui permet, le long de la ligne de jonction (J), de détecter les différences de largeur et de teinte qui peuvent apparaître entre les anneaux correspondants des deux moitiés de discogrammes.

5. Procédé selon la revendication 4, caractérisé en ce qu'il consiste à appliquer sur le discogramme (D₂) l'image fixe de la reproduction à contrôler.

6. Procédé selon la revendication 3, 4 ou 5, caractérisé en ce qu'il consiste à faire une photographie des deux discogrammes (D₁, D₂) et/ou du discogramme résultant (D′_{1,}₂) en vue d'un traitement ultérieur.

7. Procédé selon l'une des revendications 1 à 5, caractérisé en ce qu'il consiste à réaliser la détection visuelle de l'écart des couleurs des deux discogrammes (D₁, D₂) et/ou du discogramme résultant (D′_{1,2}) à travers un filtre.

8. Procédé selon la revendication 1, caractérisé en ce qu'il consiste à exposer la reproduction à contrôler (R₂) et la représentation graphique polychrome de référence (R₁) à une source lumineuse avant leur rotation.

9. Procédé selon la revendication 1, caractérisé en ce qu'il consiste, dans le cas de supports non plans des reproductions, à réaliser une correction de profondeur de champ de la représentation graphique polychrome originale et de la reproduction à contrôler, avant leur rotation.

10. Dispositif pour la mise en oeuvre du procédé selon les revendications 1 à 9, caractérisé en ce qu'il comprend :
- un système (7) pour positionner la représentation et la reproduction le long d'un axe de référence (A₁, A₂) qui passe sensiblement par un même point sur la représentation et sur la reproduction,
- deux dispositifs (8₁, 8₂) pour entraîner en rotation la représentation et la reproduction autour de leur axe de référence et à une vitesse déterminée pour obtenir une perception visuelle de continuité.

11. Dispositif selon la revendication 10, caractérisé en ce qu'il comporte un système optique (4) qui permet la visualisation de deux moitiés complémentaires des deux discogrammes dans une position dans laquelle elles sont contiguës au niveau de leur diamètre.

12. Dispositif selon la revendication 10, caractérisé en ce que chaque dispositif de mise en rotation consiste en un prisme DOVE qui est centré sur l'axe de référence de la reproduction ou de la représentation.

13. Dispositif selon la revendication 10, caractérisé en ce que chaque dispositif de mise en rotation consiste en un organe rotatif qui porte la représentation ou la reproduction et dont l'axe de rotation coïncide avec l'axe de référence.

14. Dispositif selon la revendication 10, caractérisé en ce qu'il comporte un système optique (2₁, 2₂) pour la correction de la profondeur de champ.
